Europäisches Patentamt

European Patent Office

Office européen des brevets

(11) Numéro de publication : **0 466 608 A1**

# (12) DEMANDE DE BREVET EUROPEEN

(21) Numéro de dépôt : **91401954.2**

(22) Date de dépôt : **12.07.91**

(51) Int. Cl.⁵ : **G11B 23/087**

(30) Priorité : **13.07.90 FR 9008983**

(43) Date de publication de la demande :
**15.01.92 Bulletin 92/03**

(84) Etats contractants désignés :
**BE DE ES FR GB IT**

(71) Demandeur : **SOCIETE ANONYME DYPY**
**20 rue du Général Delestraint, Z.I.**
**Vaux-le-Pénil**
**F-77000 Melun (FR)**

(72) Inventeur : **Jobart, Jean-Louis**
**5 rue du Bas-Sammoreau**
**Samoreau F-77210 Avon (FR)**

(74) Mandataire : **Aron, Georges et al**
**Cabinet de Boisse 37, Avenue Franklin D.**
**Roosevelt**
**F-75008 Paris (FR)**

(54) **Cassette pour produit en bande, munie de moyens de maintien dans une position axiale prédéterminée d'organes rotatifs montés dans cette cassette.**

(57)    La cassette comprend deux noyaux de bobines (3,3') entre lesquelles circule une bande magnétique (4), une courroie (8) passant autour d'un cabestan (5) et de deux galets de renvoi (9,9') s'appuyant sur la périphérie des bobines pour entraîner la bande d'un noyau vers l'autre. La cassette comprend un ressort (11) généralement plat et cintré, ce ressort étant pincé entre le couvercle (2) du boîtier de la cassette d'une part, les noyaux (3,3') et les galets (9,9') d'autre part, pour charger ces organes rotatifs contre le fond (1) du boîtier de manière à éviter tout flottement axial de ces organes. Le ressort peut appliquer sélectivement un couple de retenue à tout ou partie de ces organes.
    Application à des cassettes de bandes magnétiques à entraînement par courroie.

FIG.:1

La présente invention est relative à une cassette pour produit en bande et, plus particulièrement, à une telle cassette munie de moyens de maintien en position axiale d'organes rotatifs montés dans cette cassette.

On connaît de telles cassettes dans lesquelles le produit en bande est constitué par une bande magnétique d'enregistrement/lecture d'informations. Ces cassettes peuvent comprendre des première et deuxième bobines de bande, généralement coplanaires et des moyens pour guider la bande qui circule entre les deux bobines en quittant l'une pour s'enrouler sur l'autre, de manière que la bande passe devant une tête d'enregistrement/lecture d'un appareil d'exploitation.

Pour entraîner la bande d'une bobine sur l'autre, on connaît en particulier du brevet US-A-3 692 255 une cassette comprenant une courroie élastique passant entre les deux bobines et autour d'un cabestan et de deux galets de renvoi de manière à s'appuyer sur une partie de la périphérie des deux bobines pour entraîner celles-ci dans des rotations à des vitesses tangentielles égales assurant un entraînement régulier de la bande. En variante, on connaît du brevet français FR-A-2 212 981 une cassette dans laquelle la courroie passe autour d'un seul galet de renvoi pressé par la courroie contre les périphéries des deux bobines.

Toutes ces cassettes comprennent de nombreux organes rotatifs, noyaux de bobines, galets, cabestans, etc ... qu'il est avantageux de maintenir dans une position axiale précise sur leurs axes de manière à éviter tout flottement transversal de la bande devant la tête d'enregistrement/lecture, un tel flottement pouvant affecter défavorablement le processus d'enregistrement/lecture. En outre, ce flottement crée des problèmes d'usure ou de déformations de la bande, notamment sur ses bords, par frottement sur des surfaces fixes ou tournantes décentrées par rapport à la bande.

En outre, le ou les galets de renvoi et les noyaux de bobine peuvent être soumis à un couple de retenue pour créer dans les différents brins de la courroie et de la bande des tensions nécessaires pour assurer un déplacement de la bande sur la tête avec une pression suffisante, nécessaire à l'obtention d'une bonne qualité d'enregistrement/lecture.

Le maintien en position axiale des bobines peut être obtenu par la mise en place de rondelles enfoncées légèrement à force sur les axes qui supportent les bobines, ces rondelles laissant subsister un jeu axial faible mais non nul. Une autre solution, décrite dans la demande de brevet européen EP-A-170 403, consiste à monter le noyau d'une bobine sur un axe dont l'extrémité bute sur le fond d'un alésage complémentaire formé dans le noyau, un ressort chargeant ce fond contre l'extrémité de l'axe.

Le maintien en position axiale d'un galet de renvoi de la courroie et le couple de retenue qui lui est applicable, peuvent être obtenus à l'aide d'une rondelle, circulaire ou non, bombée, élastique, venant en appui d'une part sur le galet de renvoi et d'autre part sur la partie adjacente du boîtier de la cassette située dans le prolongement de l'axe du galet. On décrit une telle solution dans le brevet des Etats-Unis d'Amérique US-A-4 102 516. Le couple de retenue du galet est déterminé en partie par la force d'appui de la rondelle bombée élastique sur le galet et donc par la courbure de cette rondelle bombée et par la distance entre les faces d'appui de la rondelle sur le galet et contre la face interne adjacente du boîtier de la cassette. L'appui de la rondelle bombée élastique sur ce boîtier peut être remplacé par un appui sur une rondelle fixe également enfoncée légèrement à force sur l'axe du galet de façon à comprimer la rondelle bombée élastique.

Dans le cas d'une cassette du type décrit au brevet français No. 2 212 981 où le galet de renvoi s'appuie sur les bobines débitrice et réceptrice de bande, ce galet doit également être maintenu dans une position axiale prédéterminée. Ceci peut être obtenu par la mise en place d'un dispositif fixé sur le galet et permettant de compenser la différence entre l'épaisseur du galet et l'espace qui sépare les parois du boîtier de la cassette qui enserre ce galet. Ce dispositif peut être par exemple constitué par une tige poussée par un ressort monté dans l'axe du galet ou par un joint à soufflet monté sur cet axe pour charger le galet contre une paroi interne de référence du boîtier de la cassette comme représenté à la figure 5 de la demande de brevet européen EP-A-55150.

Toutes les solutions de la technique antérieure décrites ci-dessus au problème du maintien d'un organe rotatif dans une position axiale prédéterminée à l'intérieur d'une cassette, sont des solutions individuelles qui requièrent l'utilisation d'une ou plusieurs pièces pour chaque organe rotatif, pièces exigeant en outre une mise en place précise. Il s'agit donc de solutions coûteuses tant en matériel qu'en coût de mise en place des pièces nécessaires, que cette mise en place soit manuelle ou automatique.

La présente invention a donc pour but de réaliser une cassette de produit en bande équipée de moyens de maintien dans une position axiale prédéterminée d'organes rotatifs montés dans cette cassette, ces moyens de maintien étant de réalisation économique et de mise en place peu coûteuse.

La présente invention a aussi pour but de réaliser une telle cassette dans laquelle ces moyens de maintien comprennent un minimum de pièces.

La présente invention a encore pour but de réaliser une telle cassette dans laquelle ces moyens de maintien permettent d'appliquer éventuellement un couple de retenue à un ou plusieurs organes rotatifs.

On atteint ces buts de l'invention, ainsi que d'autres qui apparaîtront à la lecture de la présente description, avec une cassette pour produit en bande, du type qui comprend au moins des première et deuxième bobines entre lesquelles circule la bande, des moyens de guidage définissant la trajectoire suivie par la bande entre les deux bobines, ces bobines et ces moyens de guidage comprenant des organes sensiblement coplanaires montés rotatifs autour d'axes parallèles dans un boîtier de protection de ces organes et de la bande. Suivant l'invention, la cassette comprend au moins un ressort généralement plat s'étendant entre les axes de deux organes rotatifs au moins, cintré et pincé entre une paroi interne du bottier et les deux organes rotatifs pour charger ceux-ci contre des surfaces de butée internes au boîtier et définissant des positions axiales prédéterminées de ces organes dans le boîtier.

Un même ressort peut ainsi charger une pluralité d'organes rotatifs, noyaux, galets, etc... dans des positions axiales prédéterminées, ce qui rend la mise en oeuvre de l'invention particulièrement économique.

Suivant un mode de réalisation particulier de l'invention, le ressort est percé de trous au niveau de ses contacts avec les organes rotatifs, pour le passage dans ces trous d'axes débordant de ces organes. Ces trous et ces axes facilitent ainsi la mise en place précise du ressort dans la cassette.

Des moyens de fixation du ressort à la paroi adjacente du boîtier peuvent en outre être prévus.

Suivant un autre mode de réalisation de l'invention, appliqué à une cassette comprenant une courroie passant entre les bobines et autour d'un cabestan et d'un galet flottant de renvoi pressant la courroie contre les deux bobines, un organe élastique est prévu pour charger axialement le galet flottant contre une surface de butée, sur toute la trajectoire du galet dans le boîtier de la cassette. Cet organe élastique peut prendre la forme d'une lame cintrée et ancrée par ses extrémités dans la paroi interne adjacente du boîtier, dans une position permettant d'appliquer au galet flottant un couple de retenue variable en fonction de sa position.

Suivant encore une autre caractéristique importante de la présente invention, au moins une extrémité d'un ressort qui s'appuie sur un organe rotatif, est conformée pour charger élastiquement une surface étendue de cet organe de manière à lui appliquer un couple de retenue.

D'autres caractéristiques et avantages de la présente invention apparaîtront à la lecture de la description qui va suivre et à l'examen du dessin annexé dans lequel :

– la figure 1 est une vue en perpective d'une cassette de bande magnétique suivant la présente invention,
– la figure 2 est une vue en coupe de la cassette de la figure 1,
– les figures 3 et 4 sont similaires aux figures 1 et 2 et correspondent à un deuxième mode de réalisation de la cassette suivant l'invention,
– la figure 5 représente en coupe un détail d'une variante d'une cassette suivant l'invention,
– la figure 6 est une vue en perspective d'un autre mode de réalisation d'une cassette suivant l'invention, du même type que celle représentée aux figures 1 à 4,
– la figure 7 est une vue en perspective d'une cassette suivant l'invention, d'un type différent de celle représentée aux figures 1 à 4 et comprenant un seul galet de renvoi flottant, cette vue étant représentée avec arrachement partiel du boîtier de la cassette,
– la figure 8 est semblable à la figure 7 et représente une variante des moyens de maintien en position axiale prédéterminée d'organes rotatifs de la cassette, et
– la figure 9 est une vue en coupe de la cassette de la figure 8.

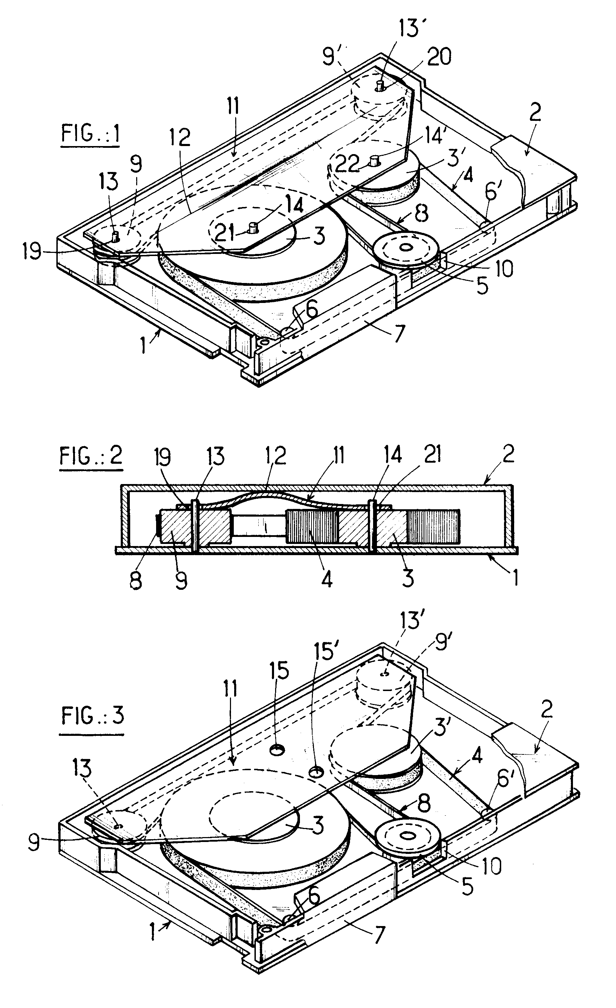

On se réfère à la figure 1 du dessin annexé où la cassette représentée est du type décrit dans le brevet des Etats-Unis d'Amérique No. 3 692 255 précité. Une telle cassette comprend un boîtier en deux parties comprenant un fond 1 et un couvercle 2, en matière plastique transparente par exemple, ce boîtier enfermant deux noyaux de bobine 3,3′ entre lesquels circulent une bande magnétique 4. La bande passe d'une bobine à l'autre, dans les deux sens, en suivant une trajectoire définie par un cabestan et des rouleaux de guidage 6, 6′ de manière passer dans une encoche 7 du boîtier propre à recevoir une tête d'enregistrement/lecture d'un appareil d'exploitation, en contact avec la bande. Il est essentiel, pour une bonne exécution des opérations d'enregistrement ou de lecture que la bande défile régulièrement sur la tête, avec un contact tête/bande bien assuré et une bonne stabilité de la position de la bande transversalement à la direction de défilement. Pour obtenir cette stabilité il est nécessaire que les divers organes rotatifs contenus dans la cassette et supportant la bande occupent eux-mêmes des positions axiales bien définies et stables. Pour un bon contact tête/bande de et une bonne régularité de la vitesse de défilement de la bande, des couples de retenue ou de frottement sont appliqués à des organes rotatifs. La présente invention a pour but de réaliser une cassette de bande magnétique qui satisfasse pleinement à ces contraintes tout en étant de construction économique.

Pour l'entraînement de la bande magnétique, la cassette est équipée d'une courroie élastique 8 qui passe entre les bobines de bande formées sur les noyau 3,3′ et autour de galets de renvoi 9,9′ placés dans deux angles de la cassette et du cabestan 5 où cette courroie est tangente à la bande magnétique 4 au niveau d'une fenêtre 10. Celle-ci est découpée dans le boîtier pour qu'un galet d'entraînement d'un appareil d'exploitation (non représenté) puisse venir en appui sur le cabestan 5 de manière à provoquer l'entraînement de la bande magnétique par mise en rotation de ce cabestan. Cette mise en rotation provoque la circulation de la courroie élastique 8 qui, s'appuyant sur les deux bobines de bande magnétique fait tourner celles-ci dans le même sens avec des vitesses tangentielles égales quels que soient leurs diamètres, pour assurer une circulation régulière de la bande entre les deux noyaux, des longueurs de bandes identiques s'enroulant et se déroulant des deux bobines respectivement, pendant un même intervalle de temps.

Pour assurer la stabilité axiale des bobines et des galets de renvoi 9,9', la cassette suivant l'invention comprend un ressort 11 généralement plat et de formes trapézoïdale, ce ressort étant cintré au niveau de la région voisine de la ligne 12. Ce cintrage est plus apparent sur le figure 2 qui est une coupe de la cassette de la figure 1 dans un plan passant par l'axe 13 du galet de renvoi 9 et l'axe 14 du noyau de bobine 3.

Des trous (19,20,21,22) sont percés dans le ressort 11, dans la même disposition que celle des axes 13, 13' et 14, 14' des galets et des noyaux respectivement. Ainsi, en cours de montage de la cassette, après mise en place des bobines de bande, des galets 9,9', du cabestan 5 et de la courroie élastique 8, on installe très simplement et très rapidement le ressort 11 dans la cassette en le centrant sur les axes 13,13' et 14,14'. On fixe ensuite le couvercle 2 sur le fond 1, ce qui a pour effet (voir figure 2) de presser la partie cintrée du ressort contre la paroi interne adjacente du couvercle 2. La pression ainsi développée se reporte sur les noyaux et les galets qui sont alors tous simultanément chargés en butée contre la paroi interne du fond 1 du boîtier de la cassette, qui définit ainsi une surface de butée ou de référence assurant un positionnement axial très précis et stable de ces noyaux et de ces galets, conformément au but recherché.

On remarquera sur la figure 2 que les parties du ressort 11 qui s'appuient sur les noyaux et les galets sont profilées de manière à établir une surface de contact étendue entre le ressort et ces organes rotatifs, propre à engendrer sur ceux-ci, grâce à la pression développée par le ressort, un couple de frottement ou de retenue. On peut régler l'importance du couple en ajustant la pression et/ou la surface de contact, en fonction des besoins, suivant qu'il s'agit d'assurer la mise en tension de brins de la bande magnétique 4 ou de brins de la courroie élastique 8.

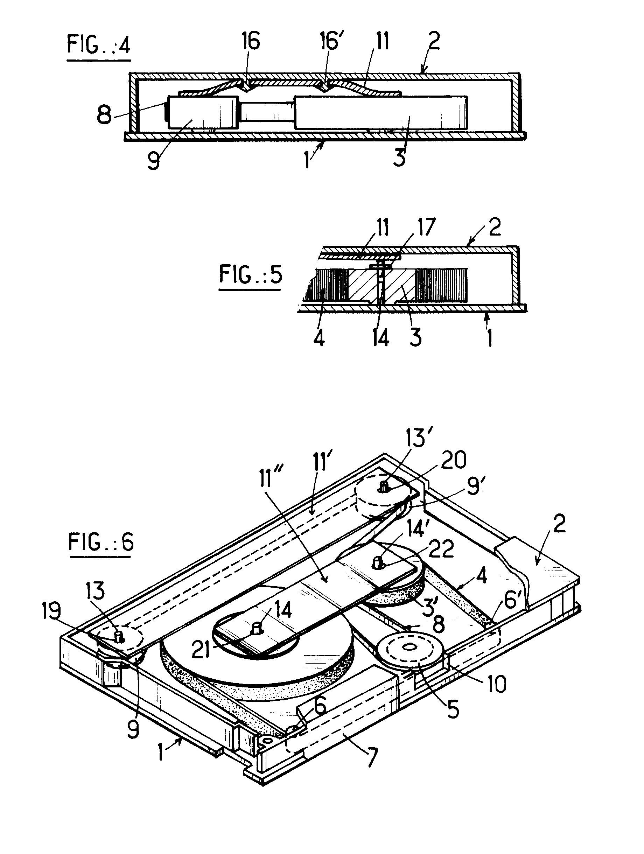

On a représenté aux figures 3 et 1 une variante de la cassette représentée aux figures 1 et 2. Dans ces figures et les suivantes, des références numériques identiques à des références utilisées sur les figures 1 et 2 concernent des éléments ou organes identiques ou similaires. Dans la variante des figures 3 et 4, le ressort 11 est fixé sur la paroi interne du fond 2 de la cassette grâce à des trous 15, 15' ( voir figure 3 ) percés dans ce ressort et conçus pour passer sur des ergots de retenue 16, 16' (voir figure 4) solidaires du couvercle 2. Dans ces conditions, les trous de passage des axes des noyaux 3, 3' et des galets 13, 13' ne sont plus nécessaires pour centrer le ressort. Ils peuvent cependant être requis pour l'application d'un couple de retenue, comme représenté à la figure 3 pour les galets de renvoi 9, 9' de la courroie élastique.

Lorsqu'on souhaite que le ressort n'applique pas de couple de retenue à l'organe rotatif chargé, on peut adopter le montage représenté à la figure 5 qui est une coupe axiale du noyau de bobine 3 par exemple. L'extrémité du ressort 11 adjacente au noyau 3 s'appuie alors sur un téton 17 de faible section, planté dans le trou central du noyau 3 qui reçoit l'axe 14.

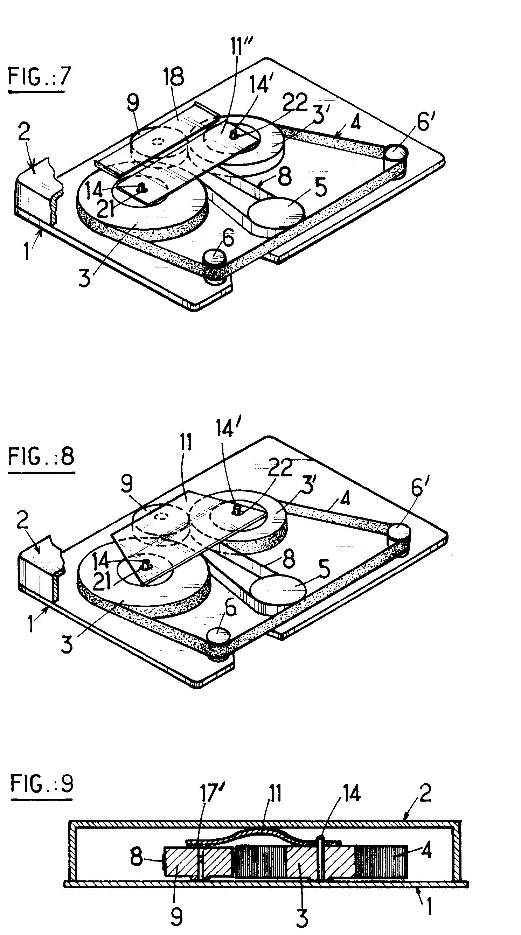

Dans la variante de la cassette des figures 1 à 5 représentée à la figure 6, le ressort 11 est remplacé par deux ressorts 11', 11'' en forme de barrette, agissant respectivement sur les galets de renvoi 9, 9' et sur les noyaux de bobine 3, 3', ces deux ressorts étant disposés parallèlement l'un à l'autre et cintrés comme le ressort 11 de la figure 2. Les ressorts 11', 11'' sont percés de trous 19, 20 et 21, 22 respectivement à leurs extrémités pour permettre leur mise en place précise et aisée sur les axes 13, 13' des galets et 14, 14' des noyaux, respectivement.

A la figure 7 on a représenté une cassette suivant l'invention, du type décrit dans le brevet français No. 2 212 981 précité, type dans lequel la courroie 8 passe entre les deux bobines et autour du cabestan 5 et d'un seul galet de renvoi 9 pressé par cette courroie contre les périphéries des deux bobines. Le galet 9 est donc monté flottant dans le boîtier de la cassette puisqu'il est amené à se déplacer dans celui-ci en fonction des diamètres croissants et décroissants des deux bobines.

Les noyaux 3,3' sont chargés élastiquement par un ressort 11'' dans des positions axiales prédéterminées définies par leur contact avec le fond 1 du boîtier de la cassette, le ressort 11'' s'engageant par deux trous d'extrémité 21, 22 sur les axes 14,14' des noyaux de bobine. Suivant l'invention, la position axiale du galet flottant de renvoi 9 est définie précisément par un contact contre le fond 1 du boîtier, sous la charge d'un organe élastique 18 ancré par ses extrémités sur le couvercle 2, par exemple dans des embrèvements (non représentés). Le ressort est cintré de manière à présenter une flèche maximum au milieu de l'espace séparant les embrèvements. Il est clair, que la bande se déroulant d'une bobine pour s'enrouler sur l'autre, les diamètres extérieurs des bobines varient en sens inverse en déplaçant le galet 9 sur une trajectoire sensiblement circulaire comme expliqué à la demande de brevet européen EP-A-55150 précitée. L'organe élastique 18 est positionné de manière à charger le galet sur toute la longueur de sa trajectoire. Du fait du cintrage de cet organe, on remarquera que la charge appliquée du galet varie en fonction de la position de celui-ci, ce qui peut être avantageusement utilisé pour adapter cette charge à cette position.

On a représenté aux figures 8 et 9 un autre mode de réalisation d'une cassette suivant l'invention, du type de celle représentée à la figure 7. Comme représenté sur la figure 8, dans ce mode de réalisation, le ressort 11″ et l'organe élastique 18 du mode de réalisation de la figure 7 sont intégrés sous la forme d'une pièce unique 11 trapézoïdale qui charge à la fois le galet de renvoi 9 et les noyaux de bobine 3 et 3′.

Comme représenté sur la coupe de la figure 9, passant par les axes du galet 9 et du noyau de bobine 3 par exemple, le ressort 11 ainsi constitué est cintré et chargé par le couvercle 2 contre le noyau et le galet qui sont alors maintenus en butée dans une position axiale bien définie, contre le fond 1 du boîtier. Le ressort 11 est centré grâce des trous sur les axes 14,14′ des noyaux de bobine. Quand on ne souhaite pas développer un couple trop important sur le galet 9, le ressort n'est pas percé au niveau de ce galet et s'appuie librement sur un téton 17′ débordant de ce galet, à la manière du montage représenté à la figure 5.

Il apparaît maintenant que la présente invention permet de définir avec précision une position axiale prédéterminée pour chacun des organes rotatifs contenus dans une cassette de bande magnétique, de manière à limiter au minimum d'éventuels flottements transversaux de cette bande devant la tête d'enregistrement/lecture d'un appareil d'exploitation d'une telle cassette. Un très petit nombre de pièces, un ou deux, permet d'atteindre ce résultat, ce qui est très économique tant en matériel qu'en temps de montage. Les moyens utilisés permettent en outre d'appliquer des couples de retenue à tout ou partie des organes rotatifs, en tant que de besoin.

Bien entendu l'invention n'est pas limitée aux modes de réalisation décrits et représentés qui n'ont été donnés qu'à titre d'exemple. Ainsi, l'invention s'étend à des cassettes de bandes magnétique ne comportant qu'une seule bobine ou bien deux bobines et à des cassettes dépourvues de courroie d'entraînement ou encore à des cassettes comprenant un seul ressort chargeant deux organes rotatifs seulement, noyaux ou galets. L'invention n'est pas limitée non plus à des cassettes contenant une bande magnétique et s'étent également à des cassettes contenant des bandes de produit permettant d'autres types d'enregistrement, thermique, optique, etc... ou contenant des bandes destinées à des usages autres que l'enregistrement d'informations.

## Revendications

1. Cassette pour produit en bande, du type qui comprend au moins des première et deuxième bobines (3,3′) entre lesquelles circule la bande (4), des moyens de guidage (5,6,6′) définissant la trajectoire suivie par la bande entre les deux bobines, ces bobines (3,3′) et ces moyens de guidage (5,6,6′) comprenant des organes sensiblement coplanaires montés rotatifs autour d'axes parallèles dans un boîtier de protection (1,2) de ces organes et de la bande, caractérisée en ce qu'elle comprend au moins un ressort (11) généralement plat s'étendant entre les axes de deux organes rotatifs au moins, cintré et pincé entre une paroi interne du boîtier (1,2) et les deux organes rotatifs pour charger ceux-ci contre des surfaces de butée internes au boîtier et définissant des positions axiales prédéterminées de ces organes dans le boîtier.

2. Cassette conforme à la revendication 1, caractérisée en ce que le ressort (11) est percé de trous (19,20, 21,22) au niveau de ses contacts avec les organes rotatifs, pour le passage dans ces trous d'axes de rotation (13,13′ ; 14,14′) débordant de ces organes.

3. Cassette conforme à l'une quelconque des revendications 1 et 2, caractérisée en ce qu'elle comprend des moyens de fixation (16,16′) du ressort (11) à la paroi adjacente du boîtier.

4. Cassette conforme à l'une quelconque des revendication 1 à 3, comprenant une courroie élastique (8) passant entre les deux bobines et autour d'un cabestan (6) et de deux galets de renvoi (9,9′) en s'appuyant sur celles-ci, caractérisée en ce que le ressort (11) charge axialement à la fois les quatre organes rotatifs constitués par les galets de renvoi (9,9′) et les noyaux (3,3′) des deux bobines.

5. Cassette conforme à l'une quelconque des revendications 1 à 3, comprenant une courroie élastique (8) passant entre les deux bobines et autour d'un cabestan (6) et de deux galets de renvoi (9,9′) en s'appuyant sur celles-ci, caractérisée en ce qu'elle comprend deux ressorts (11′,11″) en forme de barrettes disposées parallèlement l'une à l'autre pour charger d'une part les galets (9, 9′) de renvoi et, d'autre part, les noyaux de bobines (3,3′).

6. Cassette conforme à l'une quelconque des revendications 1 à 3, comprenant une courroie (8) passant entre les deux bobines et autour d'un cabestan (6) et d'un galet flottant (9) de renvoi pressant la courroie contre les deux bobines, caractérisée en ce qu'elle comprend un organe élastique (18) pour charger axialement le galet flottant (9) contre une surface de butée sur toute la trajectoire du galet dans le boîtier de la cassette.

7. Cassette conforme à la revendication 6, caractérisé en ce que ledit organe élastique (18) prend la forme d'une lame cintrée et ancrée par ses extrémités dans la paroi interne adjacente du boîtier dans une position permettant d'appliquer au galet flottant un couple de retenue variable en fonction de sa position.

8. Cassette conforme à la revendication 6 ou 7, caractérisée en ce que ledit organe élastique est formé d'une pièce (11) avec un ressort chargeant axialement les noyaux des bobines contre des surfaces de butée.

9. Cassette conforme à l'une quelconque des revendications précédentes, caractérisée en ce qu'au moins une extrémité du ressort (11) est conformée de manière à charger élastiquement sur une surface étendue d'un organe rotatif, pour lui appliquer un couple de retenue.

10. Cassette conforme à l'une quelconque des revendications précédentes, caractérisée en ce que le produit en bande est un support d'enregistrement magnétique.

FIG.:1

FIG.:2

FIG.:3

FIG.:4

FIG.:5

FIG.:6

FIG.:7

FIG.:8

FIG.:9

Office européen
des brevets

**RAPPORT DE RECHERCHE EUROPEENNE**

Numero de la demande

EP    91 40 1954

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | GB-A-2162494 (BASF AG.)<br>* abrégé; figures *<br>--- | 1, 3, 9, 10 | G11B23/087 |
| X | EP-A-030367 (HITACHI MAXELL LTD.)<br>* abrégé; figures *<br>--- | 1, 3, 9, 10 | |
| X | EP-A-060497 (HITACHI MAXELL LTD.)<br>* abrégé; figures *<br>--- | 1, 3, 9, 10 | |
| D,A | EP-A-170403 (MINNESOTA MINING AND MANUFACTURING CO.)<br>* page 3, ligne 15 - page 9, ligne 4; figures *<br>--- | 1, 3, 4, 9, 10 | |
| A | EP-A-025914 (BASF AG)<br>* abrégé; figures *<br>--- | 1-3, 9, 10 | |
| D,A | US-A-4102516 (N.L.ANGLIN ET AL)<br>* abrégé; figures *<br>--- | 1, 3, 4, 9, 10 | |
| A | FR-A-2227593 (MINNESOTA MINING AND MANUFACTURING CO.)<br>* revendications 1, 2; figures *<br>--- | 1, 9, 10 | **DOMAINES TECHNIQUES RECHERCHES (Int. Cl.5)** |
| A | EP-A-166613 (MINNESOTA MINING AND MANUFACTURING CO.)<br>--- | | G11B |
| D,A | EP-A-055150 (ENERTEC)<br>--- | | |
| A | US-A-4219169 (S.MAJICEK)<br>----- | | |

Le présent rapport a été établi pour toutes les revendications

| Lieu de la recherche | Date d'achèvement de la recherche | Examinateur |
|---|---|---|
| LA HAYE | 25 SEPTEMBRE 1991 | DECLAT M.G. |